# EUROPEAN PATENT SPECIFICATION

(11) **EP 3 937 083 B1**
(45) Date of publication and mention of the grant of the patent: **21.10.2026**
(21) Application number: 21187453.2
(22) Date of filing: 21.12.2015
(51) Int. Cl.: G06K 19/077, G06K 19/06

(54) **SMART METAL CARD WITH RADIO FREQUENCY (RF) TRANSMISSION CAPABILITY**
INTELLIGENTE METALLKARTE MIT FÄHIGKEIT ZUR HOCHFREQUENZ (HF)-ÜBERTRAGUNG
CARTE MÉTALLIQUE À CAPACITÉ DE TRANSMISSION DE RADIOFRÉQUENCE (RF)

(30) Priority: 23.12.2014 US 201462095901 P
(43) Date of publication of application: 12.01.2022
(62) Document number(s) of the earlier application(s) in accordance with Art. 76 EPC: 15874266.8 / 3 238 139
(73) Proprietor: Composecure, LLC, Somerset NJ 08873 (US)
(72) Inventor: HERSLOW, John, Scotch Plains, 07076 (US); LOWE, Adam, Hillsborough, 08844 (US); DASILVA, Luis, Bridgewater, 08807 (US)
(74) Representative: Scheele, Friedrich

(56) References cited:
- US-A1- 2009 315 320
- US-A1- 2012 055 998
- US-A1- 2012 325 914
- US-A1- 2013 075 477
- US-A1- 2014 224 881

## Description

### BACKGROUND OF THE INVENTION

The present invention relates generally to "smart" cards and, more particularly, relates to a smart card which has at least one metal layer and is capable of radio frequency (RF) transmission.

A "smart" card is a card that includes an embedded electronic chip which contains memory and/or a microprocessor and associated electronic circuitry that stores and transacts data. The card data is transacted via a card reader that is part of a computing system.

Smartcards may be of three general types: (a) "contactless", (b) "contact", and (c) "dual interface." A contactless smartcard includes an antenna by means of which RF signals are coupled between the smart card's electronic chip and an antenna of a card reader. That is, there is no direct electrical connection or contact between the card and the card reader. A contact type smart card has contacts which enable a direct electrical connection to be made between an electric chip on the card and a card reader. A dual interface smartcard has the antennas and the direct electrical contacts of the contactless and contact smart cards , so that it may operate as either a contactless or a contact smart card.

Typically, contactless and dual interface smart cards do not have an internal power source. Instead, their card antenna captures some of the RF interrogation signals emanating from the card reader, which the chip rectifies to power the card's electronics.

Contactless smart cards are becoming increasingly popular and are now finding wide use, including: in payment and ticketing applications, such as mass transit and motorway tolls; in personal identification and entitlement schemes on regional, national, and international levels; in citizen cards; in drivers' licenses; in patient card schemes; and in biometric passports to enhance security for international travel.

It has become very desirable and fashionable to make cards with one or more metal layers. A metal layer provides a decorative pattern and/or reflective surface enhancing the card's appearance and aesthetic value. This is especially desirable for use by high-end customers. However, a problem arises when using a metal layer with a contactless smart card, in that the metal layer interferes with radiofrequency (RF) communication signals between the card and the reader, and it could render the contactless smart card useless.

US 2009/315320 A1 discloses inlays for secure documents such as a passport comprising an inlay substrate may have laser ablated recesses within which a chip module is installed. Channels for an antenna wire may be formed in a surface of the substrate. Instead of using wire, the channels may be filled with a flowable, conductive material.

US 2012/055013 A1 discloses microstructures such as connection areas, contact pads, antennas, coils, plates for capacitors and the like that are formed using nanostructures such as nanoparticles, nanowires and nanotubes.

US 2012/055998 A1 discloses an RFID structure including a loop antenna assembly, an antenna substrate supporting the loop antenna assembly, and a shielding layer parallel with a plane defined by the antenna substrate.

US 2014/224881 A1 discloses a card which includes a core subassembly whose elements define the functionality of the card and a hard coat subassembly attached to the top and/or bottom sides
of the core subassembly to protect the core subassembly from wear and tear and being scratched. The core subassembly may be formed solely of plastic layers or of different combinations of plastic and metal layers and may include all the elements of a smart card enabling contactless RF communication and/or direct contact communication.

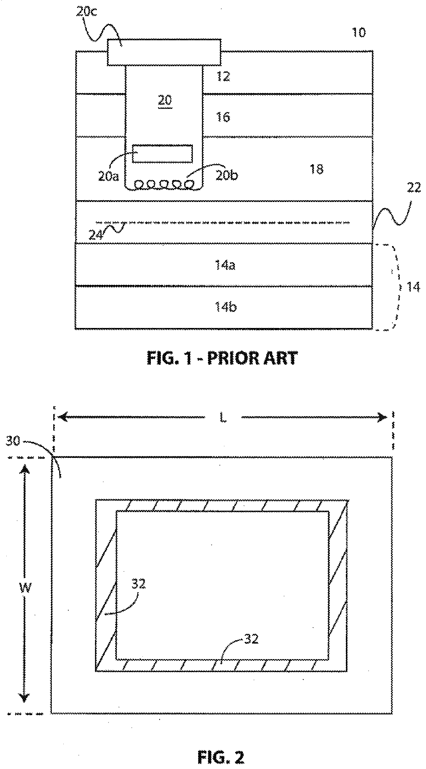

As shown in Fig. 1, prior art contactless smart cards with metal layers have used a layer 16 of ferrite material between a metal layer 12 and the internal antenna 22 of the card to shield the antenna from the deleterious effect of the metal layer. However, the ferrite layer tends to be relatively heavy, making the smart card too heavy, and the ferrite material is quite expensive. It is therefore desirable to provide a contactless smart card having a metal layer, in which card the amount of ferrite material is substantially reduced. Note: For purpose of showing a broader use of the smart cards of the invention, Fig. 1 and other figures show the cards to include a module 20 with a contact pad 20c to provide dual interface capability (i.e., contactless as well as contact operation). However, it should be understood that the problem with the ferrite layer is due primarily to the contactless (RF) operation.

It is therefore an object of the present invention to reduce substantially the amount of ferrite material utilized in a smart card with a metal layer. This is the case whether the smart card is designed to have contactless or dual interface capability.

### SUMMARY OF THE INVENTION

The invention is defined in the independent claims. Further advantageous embodiments are defined in the dependent claims.

### BRIEF DESCRIPTION OF THE DRAWINGS

The foregoing brief description and further objects, features, advantages of the invention will be understood more completely from the following detailed description of presently preferred, but nonetheless illustrative, embodiments in accordance with the present invention, with reference being had to the accompanying drawings in which:
Figure 1 is a simplified, partial cross-sectional view of a prior art contactless/dual interface smart "metal" card 10 with a metal layer 12;
Figure 2 is a plan view illustrating a step in forming a smart "metal" card in accordance with the present invention;
Figure 3 is a partial cross-sectional view of substrate 30 of Figure 2;
Figs 3A, 3B, 3C and 3D are cross sectional diagrams of different smart metal cards with ferrite shields formed between the card and chip antennas and the cards' metal layer;
Figs. 3E and 3F are exploded views showing different possible layouts of a chip module and a card antenna in cards embodying the invention;
Figure 4 is a simplified, partial cross-sectional view of a contactless/dual interface smart card 110 incorporating subassembly 36 of Figure 3;
Figure 5 is a simplified partial cross-sectional view of a contactless/dual interface smart card 210 embodying the invention; and
Figs. 6, 6A and 6B are simplified partial cross-sectional views of a dual interface smart card 310 embodying the invention; and
Fig. 7 is a cross-sectional diagram of a contactless/dual interace smart card embodying the invention.

### DETAILED DESCRIPTION OF THE PREFERRED EMBODIMENTS

Turning now to the drawings, Figure 1 is a simplified partial cross-sectional diagram of a prior art contactless/dual interface smart card 10 with a metal layer 12. A ferrite layer 16 is provided below the metal layer 12 to act as a shield to prevent metal layer 12 from interfering with radio frequency (RF) radiation to and from the smart card. A layer 18 is formed below ferrite layer 16. Layer 18 includes an embedded module 20, which contains a microprocessor chip 20a and a chip antenna 20b coupled to chip 20a. Modules such as module 20 are commercially available, for example, from NXP, SMARTRAC, Infineon, or Inside Secure.

Below layer 18, a layer 22 contains an embedded card antenna 24. Card antenna 24 is designed to capture radio frequency (RF) energy generated by an associated card reader (not shown) and to communicate with the card reader. By design, chip antenna 20b is sufficiently close to couple inductively with antenna 24, thereby coupling signals between antenna 24 and chip 20a, while keeping the chip from making a physical electrical connection with antenna 24.

In operation, ferrite layer 16 shields metal layer 12, to make it possible for radio frequency radiation to enter and be emitted from card 10. Unfortunately, the ferrite layer 16 is heavy and very expensive, making the construction impractical for many applications. The present inventors have found that it is not necessary to provide a full layer of ferrite material to shield the card antenna and/or the chip antenna from metal layer 12. It is only necessary to provide sufficient ferrite material to conform substantially to and track antenna 24.

Layer 14, comprised of sublayers 14a and 14b shown below layer 22, is intended to indicate that additional layers may be used to form card 10.

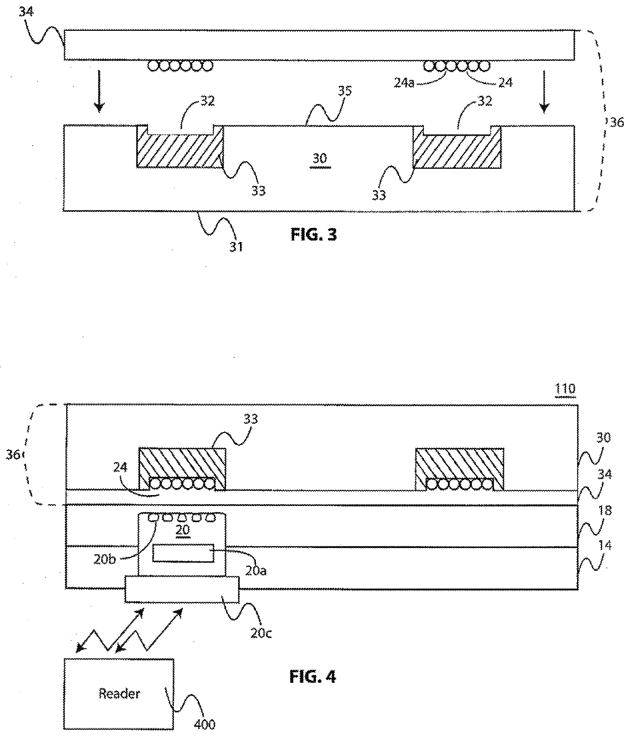

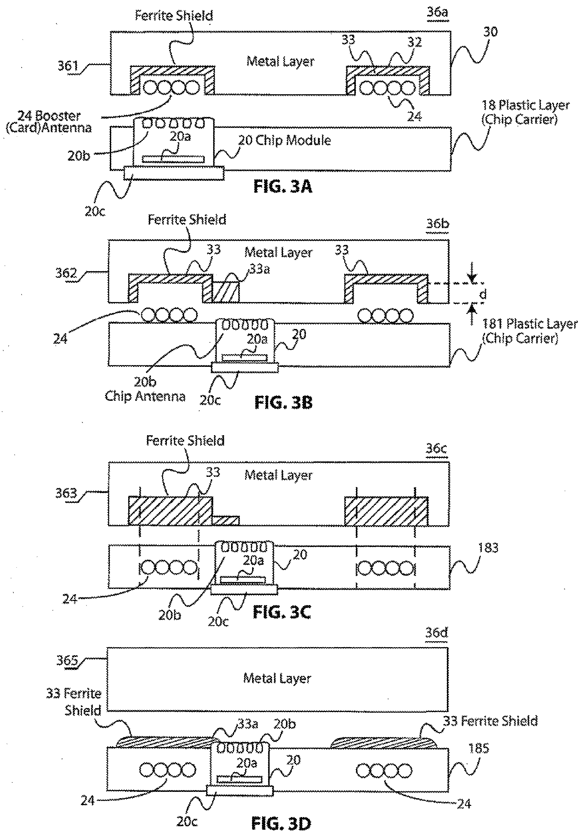

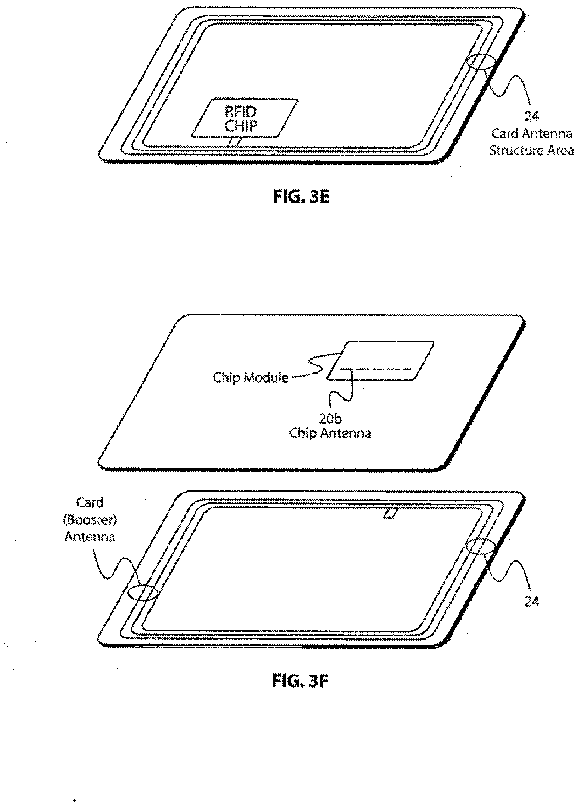

Reference will now be made to Figs. 2 and 3. Figure 2 is a plan view illustrating a step in forming a smart card in accordance with the present invention. A metal layer 30, of width, W, and length, L, may, for example, be about 0.762 mm ( .03 inches ) thick. The metal layer 30 (which may also be referred to as the substrate) is formed with a channel (groove) 32. Channel 32 is formed in the intended shape of antenna 24 (see, for example, Figs. 3E and 3F) by engraving (scribing) metal substrate 30 via mechanical means which include, for example, milling, forming, stamping and die cutting, or by means of a laser, or chemical etching.

Figure 3 includes a sectional view of metal substrate 30 having an exterior (outer) surface 31 and an inner surface 35. After groove 32 is formed on the inner surface 35, ferrite material 33 and an adhesive such as epoxy, cyanoacrylate, silicone based system or thermoplastic adhesive are applied into the channel defined by the groove 32. The ferrite 33 may be applied as a die cut sheet or as a ferrite slurry acrylic oligomer intermediate which will harden under UV exposure or after the slurry solvent is driven off. It should be noted that the ferrite 33 is preferably applied so as to be below the inner surface (e.g., 35 in Fig. 3) of the substrate 30 and to rise up to the surface (e.g., 35 of layer 30) of the card at the edges of groove 32.

Note the antenna wires cannot be completely encased or completely shielded by the ferrite layer. That is the ferrite shield cannot completely surround the antenna.

A plastic layer 34 which has an antenna 24 mounted on it in the form of windings 24a is then secured over substrate 30, preferably by bonding or any suitable means. Layer 34 may be made, for example, of PVC or polyester and may, for example, range between 0.0254 to 0.381 mm ( .001 and .015 inches ) thick. Windings 24a (also referred to herein and in the appended claims as coils) may, for example, range between 8 to 12 mm ( 80 to 120 microns ) in diameter and may be secured to layer 34 by ultrasonic welding or heating the wire prior to placing it in contact with the plastic layer. It will be appreciated that groove 32 is filled with ferrite to a level sufficiently below the top horizontal surface of substrate 30 to allow windings 24 to be flush with the horizontal surface of substrate 30. This forms a card subassembly 36. It is noted that wound antennas are shown and discussed herein but that etched antennas could also be used in cards embodying the invention.

Figure 4 is a simplified partial cross-sectional view of a contactless/dual interface smart card 110 incorporating subassembly 36. Figure 4 should be compared to Figure 1. Subassembly 36 (inverted compared to Figure 3) provides a metal layer 30 for smart card 110 and contains the ferrite shield 33 overlying card (booster) antenna 24.

A layer 18 is formed below subassembly 36. Layer 18 contains and includes a module 20, which contains a microprocessor chip 20a and a chip antenna 20b coupled to chip 20a. This layer 18 is comparable to layer 18 in Figure 1. The layer 14 is intended to indicate that there may be additional layers in the smart card 110 which are not detailed. In Fig. 4 direct contact to a reader 400 is made via a card contact pad 20c. Note that contact pad 20c is on the opposite side of the metal substrate. Contactless reading between the reader 400 and the card is also possible via RF communication between reader 400 and the antennas coupling to the chip 20a.

In operation, ferrite material 33 deposited in groove 32 shields antenna 24 (and chip antenna 20b) from metal substrate 30, to make it possible for RF radiation to enter and be emitted from antenna 24. However, the amount of ferrite utilized has been substantially reduced in comparison to Figure 1, resulting in substantial reductions in weight and cost. However, a sufficient amount of the ferrite material remains for its weight to make the smart card feel substantial. In part, the reduction in ferrite material has been made possible because the antenna is located in grooves formed in the metal card and the ferrite material forms a shield between the antenna and the metal. A metal surface interferes with RF radiation in that it absorbs incident RF signals with the metal acting as a virtual ground. The ferrite layer formed between the card antenna 24 (including chip antenna 20b) and the metal layer 30 reflects incident RF signals so they are not absorbed by the metal layer. Note that reader 400 is shown positioned to interrogate the smart card from the non-metallic side of the card for contactless operation .

Figs 3A, 3B, 3C and 3D are cross sectional diagrams of possible smart metal cards with ferrite shields formed between the card/chip antennas (24 and 20b) and the cards' metal layer (30).

Fig. 3A is similar to the structure shown in Fig. 4 except that the layer 34 has been eliminated. In this embodiment, the subassembly 36a includes a metal substrate 361 and a plastic chip carrier layer 18. The metal layer 361 is shown with a ferrite shield 33 attached to the groove 32 and with a booster card antenna 24 formed (wound) directly within the ferrite shielded groove.

Fig. 3B is directed to a smart metal card in which the antenna and chip module are offset with respect to each other corresponding to the layout shown in Fig. 3E. In this embodiment the subassembly 36b includes a metal substrate 362 and a plastic chip carrier layer 181. Fig. 3B shows that the metal layer sub-assembly 362 includes a ferrite shield 33 and a ferrite shield extension 33a to shield the space between the chip antenna 20b and the card antenna 24 to improve the RF coupling. The ferrite shield 33 extends a distance "d" from the bottom horizontal edge of the metal layer (as shown in Fig. 3B) to enable the antenna 24 to nestle within the set back space. In this configuration the card antenna 24 is positioned on the plastic layer 181 and the chip module 20 is disposed on, or within, the plastic layer 181 to form a second subassembly which can be fitted to and with the metal layer sub-assembly 362.

The following examples shown in Figs 3C and 3D are not according to the invention and are present for illustration purposes only.

Fig. 3C is directed to a smart metal card which includes a metal substrate 363 and a plastic chip carrier layer 183 to form a sub assembly 36c. The metal layer substrate 363 includes a ferrite shield 33 and a ferrite shield extension 33a to shield the space between the chip antenna 20b and the card antenna 24 to improve RF coupling. In this configuration the ferrite shield 33 may be flush with the bottom horizontal edge of the metal layer (as shown in Fig. 3C). The card antenna 24 is recessed within the plastic layer 183 and the chip module is formed on or within the plastic layer 183 to form a second subassembly which can be fitted to and with the metal layer substrate 363.

Fig. 3D shows a subassembly 36d which includes a metal substrate 365 and a plastic layer chip carrier assembly 185. Fig. 3D shows that the metal layer 365 can be a metal layer requiring no scribing or engraving. That is, there is no need to form a groove in the metal layer. A second sub-assembly 185 is formed which includes: (a) a ferrite shield 33 to shield a card antenna 24 formed on or within the plastic layer 185; (b) a chip module 20 and chip antenna 20b formed on or within the layer 185; and (c) a ferrite shield extension 33a to shield the chip antenna 20b and its pacing to the card antenna 24 to improve RF coupling. The card antenna 24 and the chip module may be formed as a step in the process of forming a sub-assembly 185 which, after being formed, could be subsequently attached to a metal layer 365. Not having to scribe or engrave the metal layer may be a significant saving in the cost of manufacture.

Referring to Fig. 3E note that the RFID chip and the card antenna can be formed on the same layer or level. This illustrates that a contactless (wireless only) card can be formed so it does not need a separate chip antenna. That is, antenna 24 could be mounted on, or in, a common layer with the RFID chip/module (e.g., 20 in the figures) and its chip could be wired to antenna 24 via conductors provided on the common layer. This would eliminate the need for antenna 20a. However, it should be understood that a chip antenna and a card antenna may be formed on the same layer with the antennas being inductively coupled.

Alternatively, as shown in Fig. 3F a card antenna 24 can be formed on, or within, one layer of a card and the chip module can be formed on another layer of the card. In the configurations of Fig. 3E or 3F, the RFID chip can be either directly connected or inductively connected to the card antenna. As already noted above, in smart metal cards embodying the invention only sufficient ferrite martial is used to track and substantially cover the underlying card (booster) antenna and the chip antenna in order to form a shield between the antenna(s) and an overlying metal layer.

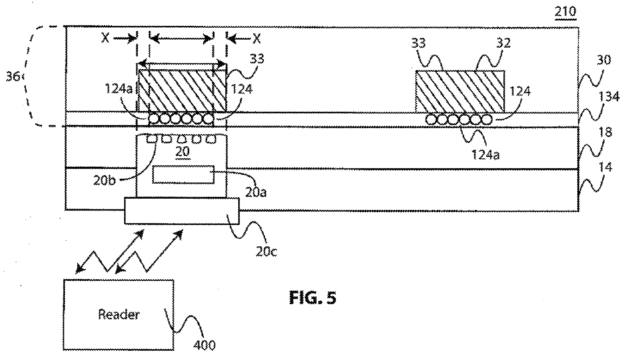

**Figure 5** is a simplified partial cross-sectional view of a dual interface (contact and contactless) smart card 210 embodying the invention. In Figure 5, a metal substrate 30 has a groove 32 formed in its surface. Groove 32 may be at least . 0.0127 mm or .0005 inches deep and may be 0.1016 mm or .004 inches deep. After groove 32 is formed, ferrite material 33 and an adhesive, as described above, are applied to fill the channel defined by the groove. The ferrite may be applied as a die cut sheet or as a ferrite slurry which will harden under UV exposure or after the solvent is driven off. Formed below substrate 30 is a plastic layer 134 having an embedded antenna 124 in the form of windings 124a. A layer 18 is formed below layer 134 and has an embedded module 20, which contains a microprocessor chip 20a and an antenna 20b coupled to chip 20a. This layer 18 is comparable to layer 18 in Figure 1. In Figs. 4 and 5 the module 20 and chip 20a are shown to extend through layers 18 and 14. In practice this may not be the case, with the chip 20 being contained within layer 18. The layer 14, as noted above, is intended to indicate that there may be additional layers in the smart card 210 that are not shown.

In Fig. 5, ferrite 33' extends laterally beyond winding 124 by an amount identified as "X" (which may be, for example, at least 0.0127 mm or 0.005 inches) in order to ensure that the metal substrate 30 will not interfere with RF transmission or reception by antenna 124.

It is also be possible to form the ferrite material as in Figure 5, but in a layer, such as a plastic layer, which is separate from substrate 30.

In operation, ferrite material 33 deposited in groove 32 shields antenna 124 from substrate 30, to make it possible for radio frequency radiation to enter and be emitted from antenna 124. However, the amount of ferrite utilized has been substantially reduced in comparison to Figure 1, resulting in substantial reductions in cost.

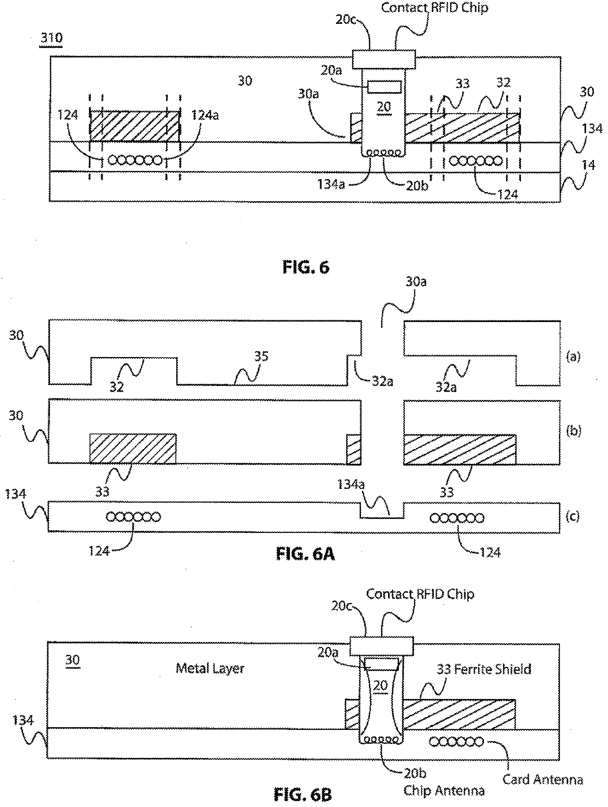

Figure 6 is a simplified partial cross-sectional view of a dual interface smart card 310 embodying the invention. In this embodiment, the contact pad 20c is on the same side/surface as the exterior (outer) surface of the metal layer 30. Fig. 6A illustrates some steps in forming the card of Fig. 6 and Fig. 6B illustrates a version of Fig. 6. The card antenna 124 is shielded with a ferrite layer like in Fig. 5. However, the structure of Fig. 6 also includes provision for mounting the chip module 20 so the card 310 can function as a contact or a contactless card (i.e., a dual interface card). Figure 6 includes a metal substrate 30 with a grooves (32, 32a) formed in, and along, its inner surface 35 as detailed in cross section (a) of Fig. 6A. The grooves (32, 32a) may range by way of example, between at least 0.0127 mm or 0.0005 inches deep and 0.1016 mm or 0.004 inches deep. After grooves 32 and 32a are formed, ferrite material 33 and an adhesive are applied to fill the channel defined by the grooves as detailed in cross section (b) of Fig. 6A. The ferrite may be applied as a die cut sheet or as a ferrite slurry which will harden under UV exposure or after the solvent is driven off. As shown in Fig. 6A, substrate 30 is formed with a through bore 30a, which is shaped to receive an RFID module 20, which contains a microprocessor chip 20a, an antenna 20b and a contact pad 20c. Pad 20c is a conventional contact pad used in contact-type smart cards and is positioned to engage contacts in a card reader when the smart card is inserted therein. Antenna 20b is shown to project below metal substrate 30, for example, by about 0.254 mm or 0.01 inch.

Formed below substrate 30 is a plastic layer 134 having an antenna 124 formed by winding the coils (windings) 24a within a plastic layer 134 as shown in the figure. Layer 134 is formed with a recess 134a shaped to receive the portion of antenna 20b that extends below substrate 30 see Fig. 6A). This permits antenna 20b to extend in close proximity to antenna 124. The layer 14 is intended to indicate that there may be additional layers in the smart card 310 that are not shown.

Preferably, the ferrite shield 33 extends laterally beyond winding 124 by at least 0.127 mm or .005 inches, as shown in greater detail in Fig. 6A, in order to ensure that substrate 30 will not interfere with transmission or reception by antenna 124.

In operation, ferrite material 33 deposited in grooves 32, 32a shield antenna 124 from metal substrate 30, to make it possible for radio frequency radiation to enter and be emitted from antenna 124 and for antennas 20b and 124 to communicate effectively. However, the amount of ferrite utilized has been substantially reduced in comparison to Figure 1, resulting in substantial reductions in cost. With pad 20c available, smart card 310 can also be used as a conventional contact-type smart card.

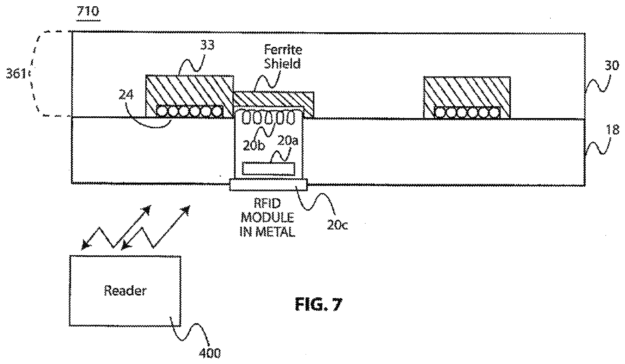

Fig. 7 illustrates that a recess may be formed in the metal substrate 30 to accommodate a card antenna and an RFID module. In this configuration a ferrite shield would be formed over the RFID module and the card antenna to shield the combination from the metal substrate. In this type of configuration the card antenna and the RFID module are positioned within the metal substrate but shielding is provided to enable RF communication between the combination and an RF reader

Although preferred embodiments of the invention have been disclosed for illustrative purposes, those skilled in the art will appreciate that many additions, modifications, and substitutions are possible without departing from the scope of the invention.

The invention is applicable to contactless smart cards and as shown in various of the figures can also be used in the manufacture of dual interface cards.

For wireless communication the reader 400 is positioned to send out interrogating signals toward the non-metallic surface of the card. For the dual interface type card shown in Fig. 6 the reader (not shown) would/could make contact to the chip along the same surface as the metal layer.

To differentiate between the ferrite layer of the prior art which is applied for the full area of a card and the limited application of the ferrite material in accordance with the invention, the ferrite material may be referred as a strip of ferrite metal.

In accordance with the present invention, ferrite material utilized in a smart card as a shield between a metal layer and an antenna does not extend for the full area of the card. Instead, only sufficient ferrite material is utilized to track and conform substantially to the antenna.

## Claims

1. A card comprising:
a plastic layer (18, 181, 34, 134) having top and bottom surfaces, a width W and a length L;
a metal layer (12, 30, 361) overlying the plastic layer (18, 181, 34, 134), said metal layer (12, 30, 361) having a top, outer, surface, a bottom, inner, surface, and a width and a length equal to that of the plastic layer (18, 181, 34, 134);
a groove (32, 32a) formed within the inner surface (35) of said metal layer (12, 30, 361);
card antenna windings (24a, 124a) extending within the groove (32, 32a) of the metal layer (12, 30, 361);
a chip module (20) having chip antenna (20b) windings positioned to communicate with the card antenna (24a, 124a) windings; and
**characterized in that** the groove is lined with ferrite material, the length and width of the ferrite material (33) within said groove (32, 32a) of the metal layer (12, 30, 361) being limited to track and conform to the underlying card antenna windings (24a, 124a) to provide an RF shield between the card antenna windings (24a, 124a) and the metal layer (12, 30, 361) and provide an RF shield between the metal layer (12, 30, 361) and underlying chip antenna (20b) windings of a chip module (20) positioned to communicate with the card antenna windings (24a, 124a).

2. The card of claim 1, wherein said ferrite material (33) lining the groove (32, 32a) of the metal layer (12, 30, 361) is disposed over the plastic layer (18, 181, 34, 134) when the plastic layer (18, 181, 34, 134) is attached to the inner surface of the metal layer (12, 30, 361).

3. The card of any of the foregoing claims, wherein the groove (32, 32a) has a lateral dimension and the card antenna windings (24a, 124a) have a lateral dimension smaller than the lateral dimension of the groove (32, 32a).

4. The card of any of the foregoing claims, wherein the ferrite material (33) extends in a lateral direction, the ferrite material extending over and overlying the underlying card antenna windings (24a, 124a).

5. The card of any of the foregoing claims, wherein the card antenna windings (24a, 124a) and the chip antenna (20b) windings are disposed on the same plastic layer (18, 181, 34, 13434).

6. The card of any of claims 1 to 5, wherein said card antenna windings (24a, 124a) and said chip antenna (20b) windings are disposed on different layers.

7. The card of any of the foregoing claims, wherein the card antenna windings (24a, 124a) extend below said groove (32, 32a) and the chip antenna (20b) windings are aligned with the card antenna windings (24a, 124a).

8. The card of any of the claims 1 to 7, wherein the chip antenna (20b) windings are laterally offset from the card antenna windings (24a, 124a) and the RF shield between the chip antenna (20b) windings and the metal layer (12, 30, 361) comprises a lateral extension of the RF shield between the card antenna windings (24a, 124a) and the metal layer.

9. A process for manufacturing a card, the process comprising the steps of:
selecting a plastic layer (18, 181, 34, 134) having top and bottom surfaces, a width W, and a length L;
providing a metal layer (12, 30, 361) overlying the plastic layer (18, 181, 34, 134), said metal layer (12, 30, 361) having a top, outer, surface, a bottom, inner, surface, and a width and a length equal to that of the plastic layer (18, 181, 34, 134);
forming a groove (32, 32a) within the inner surface of said metal layer (12, 30, 361);
forming a card antenna comprising card antenna windings (24a, 124a) extending within the groove of the metal layer;
providing a chip module (20) having chip antenna (20b) windings to communicate with the card antenna windings (24a, 124a);
**characterized by** disposing ferrite material (33) within said groove (32, 32a) of the metal layer (12, 30, 361) by limiting the ferrite material (33) within said groove (32, 32a) of the metal layer (12, 30, 361) to a length and a width sufficient to track the underlying card antenna windings (24a, 124a) for providing an RF shield between the card antenna windings (24a, 124a) and the metal layer (12, 30, 361), as well as track the underlying chip antenna (20b) windings for providing an RF shield between the chip antenna (20b) windings and the metal layer.

10. The process of claim 9, further comprising extending the card antenna windings (24a,

11. The process of claim 9 or 10, further comprising forming the groove (32, 32a) with a lateral dimension larger than a lateral dimension of the card antenna windings (24a, 124a) and extending the ferrite material (33) in the lateral dimension of the groove (32, 32a), such that the ferrite material extends over and the card antenna windings (24a, 124a).

12. The process of any of claims 9 to 11, further comprising vertically aligning the chip antenna (20b) windings with the card antenna windings (24a, 124a).

13. The process of any of claims 9 to 11, further comprising laterally offsetting the chip antenna (20b) windings from the card antenna windings (24a, 124a) and laterally extending the RF shield for the chip antenna (20b) windings from the RF shield for the card antenna windings (24a, 124a).

## Patentansprüche

1. Karte, umfassend:
eine Kunststoffschicht (18, 181, 34, 134) mit einer Ober- und einer Unterseite, einer Breite W und einer Länge L;
eine Metallschicht (12, 30, 361), die auf der Kunststoffschicht (18, 181, 34, 134) überlagert, wobei die Metallschicht (12, 30, 361) eine obere, äußere Oberfläche, eine untere, innere Oberfläche sowie eine Breite und eine Länge aufweist, die denen der Kunststoffschicht (18, 181, 34, 134) entsprechen;
eine Nut (32, 32a), die in der Innenfläche (35) der Metallschicht (12, 30, 361) ausgebildet ist;
Kartenantennenwicklungen (24a, 124a), die sich innerhalb der Nut (32, 32a) der Metallschicht (12, 30, 361) erstrecken;
ein Chipmodul (20) mit Chipantennenwicklungen (20b), die so positioniert sind, dass sie mit den Kartenantennenwicklungen (24a, 124a) kommunizieren; und
**dadurch gekennzeichnet, dass** die Nut mit Ferritmaterial ausgekleidet ist, wobei die Länge und Breite des Ferritmaterials (33) innerhalb der genannten Nut (32, 32a) der Metallschicht (12, 30, 361) auf die darunterliegenden Kartenantennenwicklungen (24a, 124a) beschränkt sind und sich an diese anpassen, um eine HF-Abschirmung zwischen den Kartenantennenwicklungen (24a, 124a) und der Metallschicht (12, 30, 361) zu schaffen sowie eine HF-Abschirmung zwischen der Metallschicht (12, 30, 361) und den darunterliegenden Chipantennenwicklungen (20b) eines Chipmoduls (20) zu schaffen, das so positioniert ist, dass es mit den Kartenantennenwicklungen (24a, 124a) kommuniziert.

2. Karte nach Anspruch 1, wobei das die Nut (32, 32a) der Metallschicht (12, 30, 361) auskleidende Ferritmaterial (33) über der Kunststoffschicht (18, 181, 34, 134) angeordnet ist, wenn die Kunststoffschicht (18, 181, 34, 134) an der Innenfläche der Metallschicht (12, 30, 361) befestigt ist.

3. Karte nach einem der vorstehenden Ansprüche, wobei die Nut (32, 32a) eine seitliche Abmessung aufweist und die Kartenantennenwicklungen (24a, 124a) eine seitliche Abmessung aufweisen, die kleiner ist als die seitliche Abmessung der Nut (32, 32a).

4. Karte nach einem der vorstehenden Ansprüche, wobei sich das Ferritmaterial (33) in seitlicher Richtung erstreckt, wobei sich das Ferritmaterial über die darunterliegenden Kartenantennenwicklungen (24a, 124a) erstreckt und diese überlagert.

5. Karte nach einem der vorstehenden Ansprüche, wobei die Kartenantennenwicklungen (24a, 124a) und die Chipantennenwicklungen (20b) auf derselben Kunststoffschicht (18, 181, 34, 13434) angeordnet sind.

6. Karte nach einem der Ansprüche 1 bis 5, wobei die Kartenantennenwicklungen (24a, 124a) und die Chipantennenwicklungen (20b) auf unterschiedlichen Schichten angeordnet sind.

7. Karte nach einem der vorstehenden Ansprüche, wobei sich die Wicklungen der Kartenantenne (24a, 124a) unterhalb der Nut (32, 32a) erstrecken und die Wicklungen der Chipantenne (20b) auf die Wicklungen der Kartenantenne (24a, 124a) ausgerichtet sind.

8. Karte nach einem der Ansprüche 1 bis 7, wobei die Wicklungen der Chipantenne (20b) seitlich gegenüber den Wicklungen der Kartenantenne (24a, 124a) versetzt sind und die HF-Abschirmung zwischen den Wicklungen der Chipantenne (20b) und der Metallschicht (12, 30, 361) eine seitliche Verlängerung der HF-Abschirmung zwischen den Wicklungen der Kartenantenne (24a, 124a) und der Metallschicht.

9. Verfahren zur Herstellung einer Karte, wobei das Verfahren die folgenden Schritte umfasst:
Auswählen einer Kunststoffschicht (18, 181, 34, 134) mit einer Ober- und einer Unterseite, einer Breite W und einer Länge L;
Bereitstellen einer Metallschicht (12, 30, 361), die über der Kunststoffschicht (18, 181, 34, 134) liegt, wobei die Metallschicht (12, 30, 361) eine obere, äußere Oberfläche, eine untere, innere Oberfläche sowie eine Breite und eine Länge aufweist, die denen der Kunststoffschicht (18, 181, 34, 134) entspricht;
Ausbilden einer Nut (32, 32a) in der Innenfläche der Metallschicht (12, 30, 361);
Ausbilden einer Kartenantenne, die Kartenantennenwicklungen (24a, 124a) umfasst, die sich in der Nut der Metallschicht erstrecken;
Bereitstellen eines Chipmoduls (20) mit Chipantennenwicklungen (20b) zur Kommunikation mit den Kartenantennenwicklungen (24a, 124a);
**gekennzeichnet durch** das Anordnen von Ferritmaterial (33) innerhalb der Nut (32, 32a) der Metallschicht (12, 30, 361), wobei das Ferritmaterial (33) innerhalb der Nut (32, 32a) der Metallschicht (12, 30, 361) auf eine Länge und eine Breite begrenzt wird, die ausreichen, um die darunterliegenden Kartenantennenwicklungen (24a, 124a) abzudecken und so eine HF-Abschirmung zwischen den Kartenantennenwicklungen (24a, 124a) und der Metallschicht (12, 30, 361) zu schaffen sowie die darunterliegenden Wicklungen der Chipantenne (20b) zu verfolgen, um eine HF-Abschirmung zwischen den Wicklungen der Chipantenne (20b) und der Metallschicht zu schaffen.

10. Verfahren nach Anspruch 9, das ferner das Verlängern der Kartenantennenwicklungen (24a, 124a) unterhalb der genannten Nut (32, 32a) umfasst.

11. Verfahren nach Anspruch 9 oder 10, das ferner das Ausbilden der Nut (32, 32a) mit einer seitlichen Abmessung umfasst, die größer ist als eine seitliche Abmessung der Kartenantennenwicklungen (24a, 124a), sowie das Ausdehnen des Ferritmaterials (33) in der seitlichen Abmessung der Nut (32, 32a), derart, dass sich das Ferritmaterial über die seitliche Abmessung der Kartenantennenwicklungen (24a, 124a).

12. Verfahren nach einem der Ansprüche 9 bis 11, das ferner das vertikale Ausrichten der Wicklungen der Chipantenne (20b) auf die Wicklungen der Kartenantenne (24a, 124a) umfasst.

13. Verfahren nach einem der Ansprüche 9 bis 11, das ferner das seitliche Versetzen der Wicklungen der Chipantenne (20b) gegenüber den Wicklungen der Kartenantenne (24a, 124a) und das seitliche Ausdehnen der HF-Abschirmung für die Wicklungen der Chipantenne (20b) gegenüber der HF-Abschirmung für die Wicklungen der Kartenantenne (24a, 124a) umfasst.

## Revendications

1. Carte comprenant :
une couche de plastique (18, 181, 34, 134) présentant des surfaces supérieure et inférieure, une largeur W et une longueur L ;
une couche métallique (12, 30, 361) recouvrant la couche de plastique (18, 181, 34, 134), ladite couche métallique (12, 30, 361) comportant une surface supérieure externe, une surface inférieure interne, ainsi qu'une largeur et une longueur égales à celles de la couche en plastique (18, 181, 34, 134) ;
une rainure (32, 32a) formée dans la surface interne (35) de ladite couche métallique (12, 30, 361) ;
des enroulements d'antenne de carte (24a, 124a) s'étendant à l'intérieur de la rainure (32, 32a) de la couche métallique (12, 30, 361) ;
un module à puce (20) comportant des enroulements d'antenne à puce (20b) positionnés de manière à communiquer avec les enroulements d'antenne de carte (24a, 124a) ; et
**caractérisé en ce que** la rainure est revêtue d'un matériau en ferrite, la longueur et la largeur du matériau en ferrite (33) à l'intérieur de ladite rainure (32, 32a) de la couche métallique (12, 30, 361) étant limitées de manière à épouser le tracé des enroulements d'antenne de carte sous-jacents (24a, 124a) afin de former un blindage RF entre les enroulements d'antenne de carte (24a, 124a) et la couche métallique (12, 30, 361) et de fournir un blindage RF entre la couche métallique (12, 30, 361) et les enroulements sous-jacents de l'antenne à puce (20b) d'un module à puce (20) positionné de manière à communiquer avec les enroulements d'antenne de la carte (24a, 124a).

2. Carte selon la revendication 1, dans laquelle ledit matériau en ferrite (33) tapissant la rainure (32, 32a) de la couche métallique (12, 30, 361) est disposé sur la couche de plastique (18, 181, 34, 134) lorsque la couche de plastique (18, 181, 34, 134) est fixée à la surface interne de la couche métallique (12, 30, 361).

3. Carte selon l'une quelconque des revendications précédentes, dans laquelle la rainure (32, 32a) présente une dimension latérale et les enroulements d'antenne de la carte (24a, 124a) présentent une dimension latérale inférieure à la dimension latérale de la rainure (32, 32a).

4. Carte selon l'une quelconque des revendications précédentes, dans laquelle le matériau en ferrite (33) s'étend dans une direction latérale, ledit matériau en ferrite s'étendant sur les enroulements d'antenne de la carte sous-jacents (24a, 124a) et les recouvrant.

5. Carte selon l'une quelconque des revendications précédentes, dans laquelle les enroulements d'antenne de la carte (24a, 124a) et les enroulements de l'antenne à puce (20b) sont disposés sur la même couche de plastique (18, 181, 34, 13434).

6. Carte selon l'une quelconque des revendications 1 à 5, dans laquelle lesdits enroulements d'antenne de la carte (24a, 124a) et lesdits enroulements d'antenne à puce (20b) sont disposés sur des couches différentes.

7. Carte selon l'une quelconque des revendications précédentes, dans laquelle les enroulements d'antenne de la carte (24a, 124a) s'étendent sous ladite rainure (32, 32a) et les enroulements de l'antenne à puce (20b) sont alignés avec les enroulements d'antenne de la carte (24a, 124a).

8. Carte selon l'une quelconque des revendications 1 à 7, dans laquelle les enroulements de l'antenne à puce (20b) sont décalés latéralement par rapport aux enroulements de l'antenne de la carte (24a, 124a) et le blindage RF entre les enroulements de l'antenne à puce (20b) et la couche métallique (12, 30, 361) comprend une extension latérale du blindage RF entre les enroulements de l'antenne de la carte (24a, 124a) et la couche métallique.

9. Procédé de fabrication d'une carte, le procédé comprenant les étapes consistant à :
sélectionner une couche de plastique (18, 181, 34, 134) présentant des surfaces supérieure et inférieure, une largeur W et une longueur L ;
la mise en place d'une couche métallique (12, 30, 361) recouvrant la couche en plastique (18, 181, 34, 134), ladite couche métallique (12, 30, 361) présentant une surface supérieure externe, une surface inférieure interne, ainsi qu'une largeur et une longueur égales à celles de la couche en plastique (18, 181, 34, 134) ;
former une rainure (32, 32a) dans la surface interne de ladite couche métallique (12, 30, 361) ;
former une antenne de carte comprenant des enroulements d'antenne de carte (24a, 124a) s'étendant à l'intérieur de la rainure de la couche métallique ;
prévoir un module à puce (20) comportant des enroulements d'antenne à puce (20b) destinés à communiquer avec les enroulements d'antenne de la carte (24a, 124a) ;
**caractérisé par** le fait de disposer un matériau en ferrite (33) à l'intérieur de ladite rainure (32, 32a) de la couche métallique (12, 30, 361) en limitant le matériau en ferrite (33) à l'intérieur de ladite rainure (32, 32a) de la couche métallique (12, 30, 361) à une longueur et une largeur suffisantes pour épouser le tracé des enroulements d'antenne de carte sous-jacents (24a, 124a) afin de fournir un blindage RF entre les enroulements d'antenne de carte (24a, 124a) et la couche métallique (12, 30, 361), ainsi que de suivre les spires de l'antenne à puce (20b) sous-jacentes afin de fournir un blindage RF entre les spires de l'antenne à puce (20b) et la couche métallique.

10. Procédé selon la revendication 9, comprenant en outre le fait de prolonger les enroulements d'antenne de carte (24a, 124a) sous ladite rainure (32, 32a).

11. Procédé selon la revendication 9 ou 10, comprenant en outre la formation de la rainure (32, 32a) avec une dimension latérale supérieure à une dimension latérale des enroulements de l'antenne de carte (24a, 124a) et l'extension du matériau en ferrite (33) sur la dimension latérale de la rainure (32, 32a), de telle sorte que le matériau en ferrite s'étende au-dessus et sur les enroulements de l'antenne de carte (24a, 124a).

12. Procédé selon l'une quelconque des revendications 9 à 11, comprenant en outre l'alignement vertical des enroulements de l'antenne à puce (20b) avec les enroulements de l'antenne de carte (24a, 124a).

13. Procédé selon l'une quelconque des revendications 9 à 11, comprenant en outre le décalage latéral des enroulements de l'antenne à puce (20b) par rapport aux enroulements de l'antenne de carte (24a, 124a) et l'extension latérale du blindage RF destiné aux enroulements de l'antenne à puce (20b) par rapport au blindage RF destiné aux enroulements de l'antenne de carte (24a, 124a).
